# EUROPEAN PATENT APPLICATION

(11) **EP 0 597 351 A2**
(43) Date of publication of application: **18.05.1994**
(21) Application number: 93117716.6
(22) Date of filing: 02.11.1993
(51) Int. Cl.: B29C 65/04, B29C 65/00

(54) **Mold for high-frequency welding**

(30) Priority: 11.11.1992 IT TV920134
(71) Applicant: NORDICA S.p.A., I-31040 Trevignano (Treviso) (IT)
(72) Inventor: Benvenuto, Ernesto, I-31044 S. Gaetano di Montebelluna (IT)
(74) Representative: Modiano, Guido, Dr.-Ing.

(57) **Abstract**

A mold for high-frequency welding two layers of polyurethane-based and/or high-density plastic material having a thickness comprised between 0.5 and 5 millimeters each. The mold (1) has at least one lower electrode (5) which is provided with one or more protruding elements (15) at the welding region. The mold allows to obtain high-frequency welding with materials having a considerable thickness.

## Description

The present invention relates to a mold for high-frequency welding, particularly for two layers of polyurethane-based plastic material having a considerable thickness.

In high-frequency welding, the heat is produced by the current flow induced by a high-frequency electromagnetic field. High-frequency welding is currently used for welding films or sheets having a thickness comprised between one tenth and five tenth of millimeter.

By applying a compression force, for example by means of an adapted two-part mold, molecular interpenetration of two superimposed flaps to be welded is obtained.

High-density materials, such as polyvinylchloride, are among the plastic materials used.

In using this material, the magnetic variations occur at very high frequencies, around 27 MHz, and this is done to obtain significant temperature increases.

Currently, high-frequency welding is less and less used for polyvinylchloride, because if this materials burns, highly toxic gases can form.

Furthermore, high-frequency welding requires the use of thin flexible materials which cannot be used in the structural components of some products, such as, for example, plastic sports shoes such as ski boots or roller skates, where the components must have a high rigidity.

The aim of the present invention is to overcome the above problems by providing a mold which allows to high-frequency weld polyurethane-based and/or high-density plastic materials having a considerable thickness.

Within the scope of the above aim, an object of the invention is to provide a mold adapted to produce a sports shoe, by high-frequency welding the individual components which can be mutually coupled in an optimum manner and without burrs.

Another object is to provide a mold which is safe and reliable in use and has low manufacturing costs.

This aim, these objects and others which will become apparent hereinafter are achieved by a mold for the high-frequency welding of at least two layers of polyurethane-based and/or high-density plastic material having a considerable thickness, characterized in that it comprises at least one lower electrode, provided with at least one protruding element at the welding region, and comprises an upper electrode, an insert being associated with said upper electrode, said insert being made of temperature-resistant plastic material and constituting a means for preventing the overflow of one of said two layers of plastic material.

Further characteristics and advantages of the present invention will become apparent from the detailed description of a particular but not exclusive embodiment, illustrated only by way of non-limitative example in the accompanying drawings, wherein:
figure 1 is a sectional view of the upper and lower electrodes of the mold, in open position, showing the arrangement of the two layers of plastic material to be welded;
figure 2 is a view, similar to the preceding one, showing the two layers of plastic material at the lower electrode;
figure 3 is a view, similar to the preceding ones, showing the upper electrode with the insert adjacent to one of the layers of plastic material;

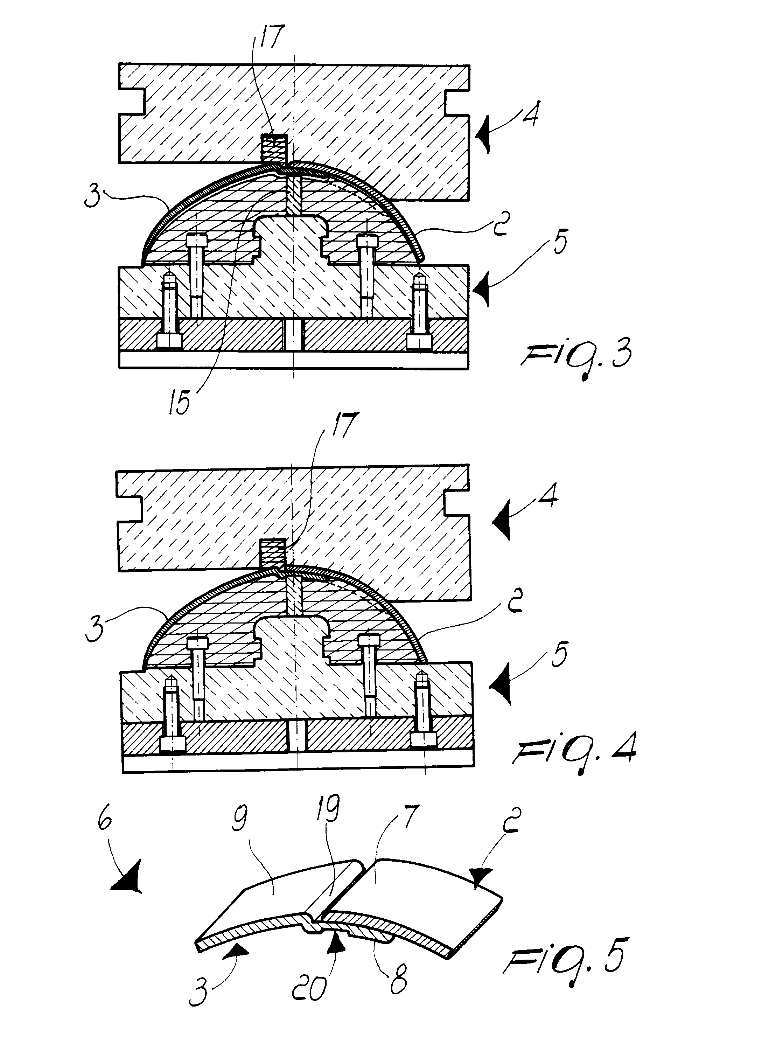

figure 4 is a view similar to the preceding ones showing the closure of the mold after the thermoforming step;

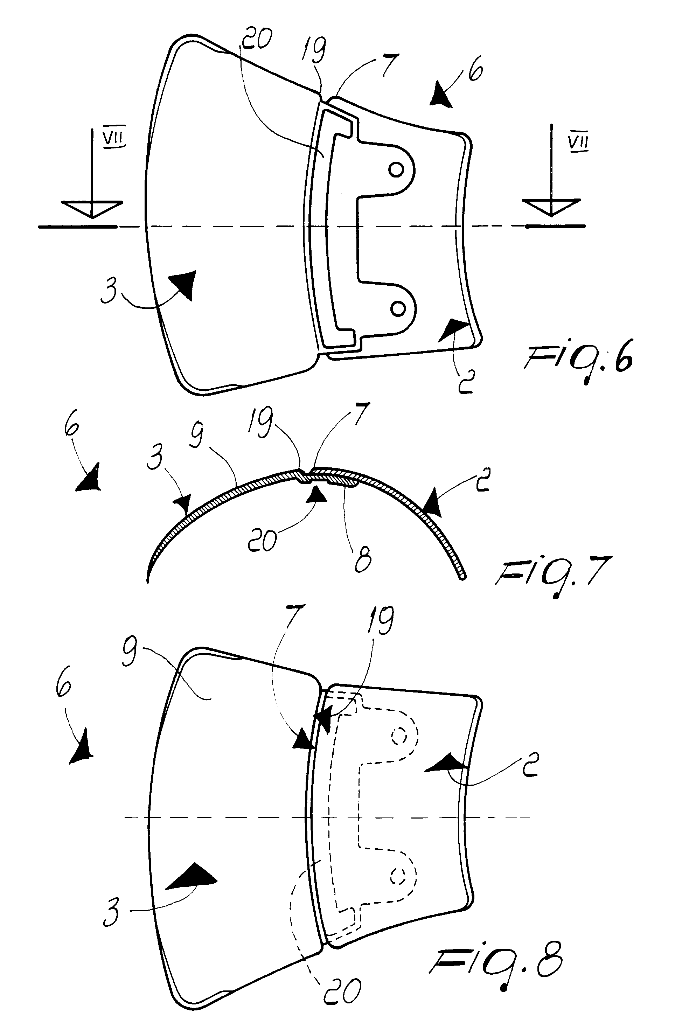

figure 5 is a detail sectional perspective view of the bonded layers;
figure 6 is a bottom view of an embodiment of the two layers of plastic material which are bonded with the imprint of the energy concentrator;
figure 7 is a sectional view, taken along the plane VII-VII of figure 6;
figure 8 is a top view of the layers of figure 6.

With reference to the above figures, the reference numeral 1 designates the mold for the high-frequency welding of a first layer 2 and of a second layer 3 of polyurethane-based and/or high-density plastic material of considerable thickness.

Said first and second layers are made of thermoplastic materials having an electric strength which can vary between 49 and 50 KV/mm and an electrical resistivity of approximately 10¹² Ohm/cm with a dielectric constant which can vary between 4.6 and 4.9.

The mold 1 is constituted by an upper electrode 4 and by a lower electrode 5 which can be mutually superimposed by pressure.

In the illustrated embodiment the forming of a flap 6 is shown. The flap 6 comprises two elements having a substantially arc-shaped transverse cross-section; the flap 6 is subsequently associated with a shell or with a quarter of a sports shoe.

Alternatively, it is also possible to weld the flap to the shell or to the quarter.

In the illustrated embodiment, the first layer 2 is substantially flat and approximately shaped like a circular arc, in which a first end 7 must be bonded at an underlying tab 8 connected to a step lying a plane which is lower than the surface 9 of the second layer 3.

For this purpose, the upper electrode 4 has a first region 10 which is shaped complementarily to the underlying first layer 2, the first end 7 whereof is arranged slightly beyond the longitudinal median plane of the electrodes.

The upper electrode 4 also has a second flat region 11 at the region overlying the surface 9 of the second layer 3.

The lower electrode 5 has a first seat 12, at the median region. The first seat 12 is shaped complementarily to the tab 8, whereas a third region 13 and a fourth region 14 are formed adjacent to the first seat 12 and have a curvature which is approximately equal to that of the first layer 2 and of the second layer 3 respectively.

At the first seat 12, which corresponds to the welding region, the lower electrode 5 has one or more protruding elements 15 which are constituted, in the illustrated embodiment, by an energy concentrator which is arranged at the median region and has a band-like shape which partially affects the transverse extension of the flap 6 at the overlap to be formed between the first end 7 and the tab 8.

Said protruding element 15 in fact protrudes slightly beyond the bottom 16 of the first seat 12.

At least one insert 17 is coupled at the upper electrode and comprises a band made of a plastic material which withstands the welding temperature and has a tooth 18 protruding therefrom toward the underlying lower electrode 5 and is such that it is arranged in the interspace which is present between the first end 7 of the first layer 2 and the edge 19 for blending the tab 8 and the surface 9 of the second layer 3.

The purpose of said insert 17 is to avoid the overflow of the material of one of said first and/or second layers during welding.

Welding in fact occurs according to the following method:
the first step entails the opening of the mold and the placement of the second layer 3 with the tab 8 in the first seat 12 and the overlapping of the first end 7 of the first layer 2 above said tab 8, leaving a free interspace between the first end 7 and the edge 19.

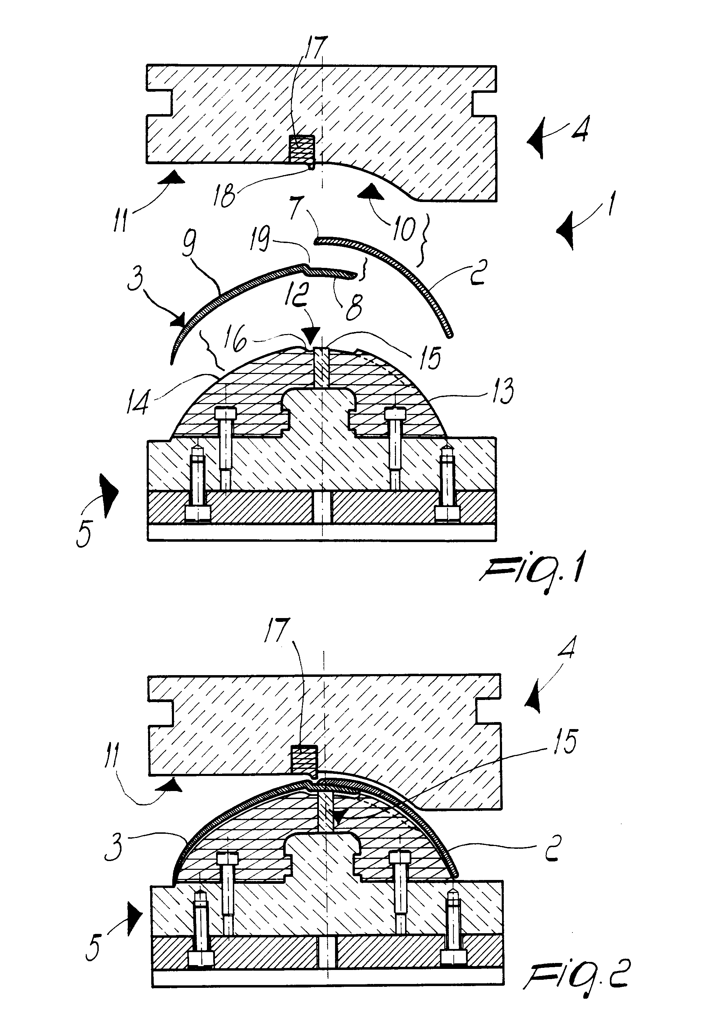

These steps are schematically shown in figures 1 and 2.

The mold is then closed, as shown in figure 3, wherein the insert 17 places the tooth 18 in the interspace between the first end 7 of the first layer 2 and the edge 19 for blending the tab 8 and the surface 9 of the second layer 3.

The tooth 18 is shaped complementarily to the edge 19 and to the first end 7.

Welding begins during this initial step; during this welding, the pressure applied to the mold causes the tab 8, during plasticization, to arrange itself within the first seat 12, forming a second seat 20 which is shaped complementarily to the protruding element 15.

The presence of the insert 17 allows to avoid damage to the exposed parts of the first and second layers, also preventing the overflow of the material which constitutes them during welding.

Once the welding has been completed and the mold has been opened, a product is obtained which comprises a first layer 2 and a second layer 3 which are perfectly bonded together without overflows of material and can be highlighted due to the presence, at the lower surface of the tab 8, of the second seat 20, which is shaped complementarily to the protruding element 15.

The blending region between the edge 19 and the first end 7 is outlined perfectly by virtue of the presence of the insert 17.

It has thus been observed that the invention has achieved the intended aim and objects, a mold having been provided which allows to achieve high-frequency welding of polyurethane-based and/or high-density plastic material of high thickness, all this being provided in an optimum manner and with no overflow.

The mold according to the invention is naturally susceptible to numerous modifications and variations, all of which are within the scope of the same inventive concept.

For example, the welding process can be equally used to superimpose a plate of plastic material on an underlying support, also made of plastic material; the welding would thus affect the perimetric region of the plate which is in contact with the support, and energy concentrators of appropriate shape would be provided.

The materials and the dimensions which constitute the individual components of the mold may also be the most pertinent according to the specific requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Mold for the high-frequency welding of at least two layers of polyurethane-based and/or high-density plastic material having a considerable thickness, characterized in that it comprises at least one lower electrode (5), provided with at least one protruding element (15) at the welding region, and comprises an upper electrode (4), an insert (17) being associated with said upper electrode, said insert being made of temperature-resistant plastic material and constituting a means for preventing the overflow of one of said two layers of plastic material.

2. Mold according to claim 1, characterized in that said at least one protruding element constitutes energy concentrators.

3. Mold according to one or more of the preceding claims, characterized in that it allows the high-frequency welding of a first layer (2) and of a second layer (3) of polyurethane-based and/or high-density plastic material of considerable thickness, said first and second layers being made of thermoplastic materials having an electric strength which can vary between 40 and 50 kV/mm and an electrical resistivity of approximately 10¹² Ohm/cm with a dielectric constant which can vary between 4.6 and 4.9.

4. Mold according to one or more of the preceding claims, characterized in that said upper electrode (4) and said lower electrode (5) are mutually superimposed by pressure.

5. Mold according to one or more of the preceding claims, characterized in that it allows to form a flap (6) which is associable with a shell or with a quarter of a sports shoe, said flap having, in a transverse cross-section, an essentially arc-like shape, said first layer being shaped approximately like a circular arc, wherein a first end (7) must be bonded at an underlying tab (8) which is blended so as to form a step on a plane which is lower than a surface (9) of said second layer (3).

6. Mold according to claim 5, characterized in that said upper electrode has a first region (10) which is shaped complementarily to said underlying first layer (2), the first end (7) whereof is arranged slightly beyond the longitudinal median plane of said electrodes, said upper electrode (4) having a second flat region (11) at the region overlying said surface (9) of said second layer (3).

7. Mold according to claim 6, characterized in that said lower electrode (5) has, at its median region, a first seat (12) which is shaped complementarily to said tab, whereas a third (13) region and a fourth region (14) are formed in the regions adjacent to said first seat (12), said third and fourth regions having a curvature which is approximately equal to that of said first (2) and second (3) layers respectively.

8. Mold according to claim 7, characterized in that said lower electrode has, at said first seat which corresponds to the welding region, one or more protruding elements (15) which are constituted by an energy concentrator arranged at the median region and having a band-like shape which partially affects the transverse extension of said flap (6) at the overlap to be formed between said first end (7) and said tab (8).

9. Mold according to claim 8, characterized in that said protruding element (15) protrudes slightly beyond the bottom (16) of said first seat (12).

10. Mold according to claim 9, characterized in that at least one insert (17) is coupled at said upper electrode (4) and is constituted by a band made of a plastic material which withstands the welding temperature and has at least one tooth (18) protruding therefrom toward said underlying lower electrode (5) and such that it is arranged in the interspace present between said first end (7) of said first layer (2) and an edge (19) for mutually blending said tab (8) and said surface (9) of said second layer (3).

11. Process for the high-frequency welding of at least two layers of polyurethane-based and/or high-density plastic material of considerable thickness, according to one or more of the preceding claims, characterized in that it entails a first step in which said mold (1) is opened and said second layer (3) is positioned so that said tab (8) is in said first seat (12) and said first end (7) of said first layer (2) is superimposed above said tab (8), a free interspace being left between said first end (7) and said edge (19).

12. Process according to claim 11, characterized in that it comprises a second step wherein said mold (1) is closed so as to position said at least one tooth (18) of said insert (17) in the interspace formed between said first end (7) of said first layer (2) and said edge (19) for the mutual blending of said tab (8) and said surface (9) of said second layer (3).

13. Process according to claim 12, characterized in that said tooth (18) is shaped complementarily to said edge (19) and to said first end (7).

14. Process according to claim 12, characterized in that it comprises a third step in which welding occurs and during which the pressure applied to said mold (1) causes said tab (8), during plasticization, to arrange itself within said first seat (12), forming a second seat (20) which is shaped complementarily to said protruding element (15).

15. Product obtained with the process and the mold, according to one or more of the preceding claims, characterized in that it comprises a first layer (2) and a second layer (3) of polyurethane-based and/or high-density plastic material of considerable thickness which are mutually bonded without overflows of material, said product having, at the lower surface of said tab (8), said second seat (20) which is shaped complementarily to said at least one protruding element (15), the region for the mutual blending of said edge (19) and said first end (7) being outlined perfectly by virtue of the presence of said at least one insert.
